Europäisches Patentamt

European Patent Office

Office européen des brevets

(19)

(11) Publication number: **0 251 545**

**A1**

(12) # EUROPEAN PATENT APPLICATION

(21) Application number: **87305287.2**

(22) Date of filing: **15.06.87**

(51) Int. Cl.³: **F 16 D 65/08**

(30) Priority: **20.06.86 GB 8615060**

(43) Date of publication of application:
**07.01.88 Bulletin 88/1**

(84) Designated Contracting States:
**BE DE ES FR IT LU NL SE**

(71) Applicant: RUBERY OWEN-ROCKWELL LIMITED
Booth Street
Darlaston Wednesbury West Midlands(GB)

(72) Inventor: Diggs, Edward Jackson
Rockwell Int. Cop 2135 West Maple Road
Troy Michigan 48084(US)

(72) Inventor: Dawson, Graham Stanley
3 Trem-Y-Nant Coed-Y-Glyn
Sontley Wrexham Clwyd Wales(GB)

(72) Inventor: Horton, David
8 Rushford Avenue
Wombourne Wolverhampton(GB)

(74) Representative: Stonehouse, Sidney William
Barker, Brettell & Duncan 138 Hagley Road Edgbaston
Birmingham B16 9PW(GB)

(54) Brake assemblies.

(57) Conventional shoe and drum brakes, for example for vehicles, require removal of the brake drum and the brake shoes for renewal of the friction linings.

A brake shoe is provided having gussets (1, 2) secured together in spaced parallel relationship by bridges (3, 4). A platform (13) carrying a friction lining (21) is separable from the gussets for servicing so that it can be withdrawn laterally without necessarily removing the brake drum.

The platform is received and retained in recesses (11, 12) of the gussets which have inclined sides (11A, 12A) with which complementally inclined edges (14, 15) of the platform co-operate. A lug (16) depending from the platform (13) abuts against one gusset (2) to locate the platform laterally. A hole (17) in the lug (16) and a registering screw-threaded hole (18) in the gusset (2) are engaged by a screw (19) to secure the platform and gussets in assembled relationship. The lug (16) may be extended and have two screw-threaded holes to receive screws, as (19), which will react against the gusset (2) to withdraw the platform from the recesses for servicing.

EP 0 251 545 A1

FIG 1

## BRAKE ASSEMBLIES

This invention relates to brake assemblies of the internal expanding shoe and drum type wherein the brake shoes have at least one gusset or web, such as are used on heavy vehicles.

Conventional shoe and drum type brakes require removal of the brake drum for access to the brake for replacement of worn friction linings. The wheel has to be removed to allow removal of the brake drum and the brake shoes have to be removed to be re-lined with linings of friction material or replaced by ready lined service brake shoes.

This invention is directed to facilitating the replacement of friction linings of internal expanding shoe and drum type brake assemblies.

According to one aspect of the present invention a brake shoe is provided comprising at least one generally arc-shaped gusset and a platform thereon having another face adapted to carry a friction lining, and being characterised in that the gusset and platform are separable components, a mounting is fast with the gusset, the platform has at least one surface which co-operates with the mounting to locate the platform relative to the gusset, and releasable means secure the platform and gusset together in assembled relationship.

Means may be provided to act between the platform and gusset to cause release, or release and at least partial withdrawal, of the platform from the mounting.

The mounting may include laterally extending means for guidance and/or location of the platform.

The mounting preferably locates the platform longitudinally of the gusset.

There may be more than one gusset. For example two generally arc-shaped gussets may be joined together in laterally spaced relationship whereon the mounting is provided.

The platform may be generally arc-shaped.

Where there are two gussets, for example, the releaseable means may secure the platform to one gusset or to both gussets.

Co-operating means on the or each gusset and the platform may be provided whereby the platform is removably received and located on the convex face of the gusset or gussets.

Means may be provided to locate the platform laterally relative to the gusset or gussets.

Means may be provided to facilitate insertion of a platform into the mounting.

According to a second aspect the invention also comprises a brake assembly including brake shoes in accordance with the first aspect of the invention set out herein.

Embodiments of the invention will now be described by way of example with reference to the accompanying drawings in which:

Figure 1 is a perspective view from above and one side showing the component parts of a brake shoe;

Figure 2 is a similar view of an alternative brake shoe;

Figure 3 is a scrap side view of part of the brake shoe of Figure 2, partly in section;

Figure 4 is a perspective view of a release/withdrawal tool;

Figures 5 to 8 are sections through a modified brake shoe with two parallel spaced gussets showing stages in the release and withdrawal of the platform from its mounting;

Figure 9 is a perspective view of a brake shoe with laterally extending bridges.

Figure 10 is a scrap view showing an alternative mounting and releaseable securing means for a platform;

Figure 11 is a scrap view showing a further alternative mounting for a platform having joggled edges; and

Figure 12 is a perspective view showing component parts of a brake assembly.

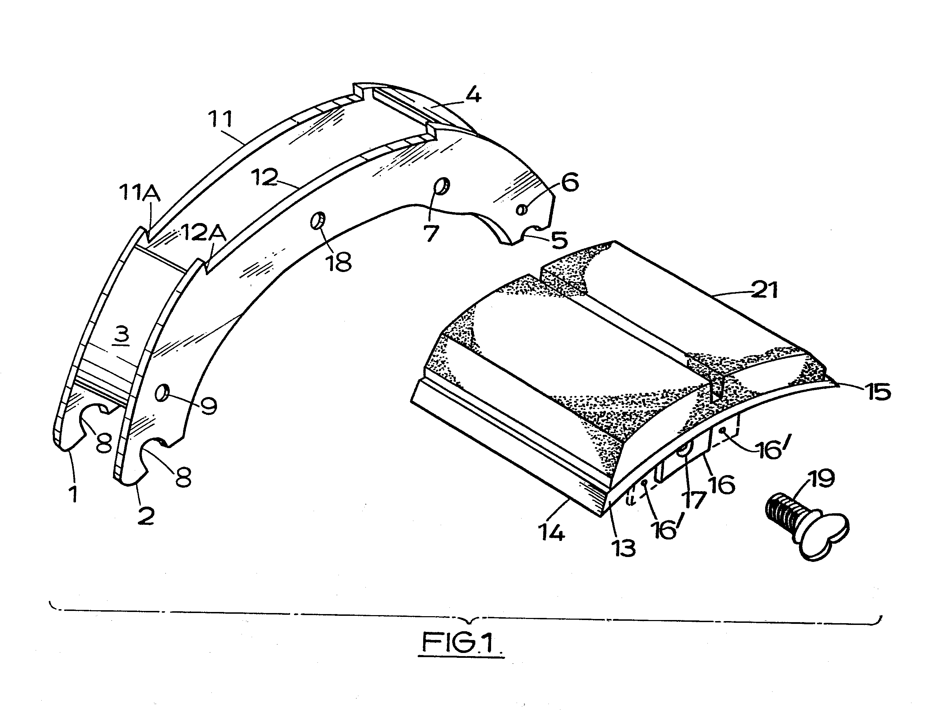

Referring to Figure 1 of the drawings, the brake shoe shown has two generally arc-shaped gussets 1, 2 joined, as by welding, in parallel spaced relationship by bridges 3, 4. At one end each gusset has a semi-circular cut-out 5 to receive a cam roller for brake operation by a conventional S cam. Also at that end are holes 6 which provide locations for a cam roller retainer and holes 7 to provide an anchorage for a brake release spring. The other end of each gusset has a slot 8 to receive a brake anchor pin, such as is described in British Patent No. 1 580 963 of Rockwell International Corporation. Holes 9 provide an anchorage for a retaining spring.

The convex face of each gusset 1, 2 intermediate its ends has a recess 11, 12, the recesses being in alignment and having their ends inwardly inclined as shown in Figure 1.

An arcuately shaped platform 13, generally rectangular in plan view, has bevelled edges 14, 15 inclined complementally to the inwardly inclined ends of the recesses 11, 12 whereby the platform can be inserted into the recesses and located and retained by their interengagement with the inwardly inclined ends of the recesses. The platform 13 has a downwardly depending lug 16 which locates against one gusset 2 when the platform is assembled to the gussets, locating the platform transversely of the gussets. A hole 17 in the lug 16 registers with a screw-threaded hole 18 in that gusset 2 and the assembly is secured with a wing screw 19. A friction lining 21 is secured to the platform 13 on its convex face, as by bonding or riveting. The convex faces of the recesses 11, 12 may be relieved to allow clearance for rivet ends protruding from the concave face of the platform 13.

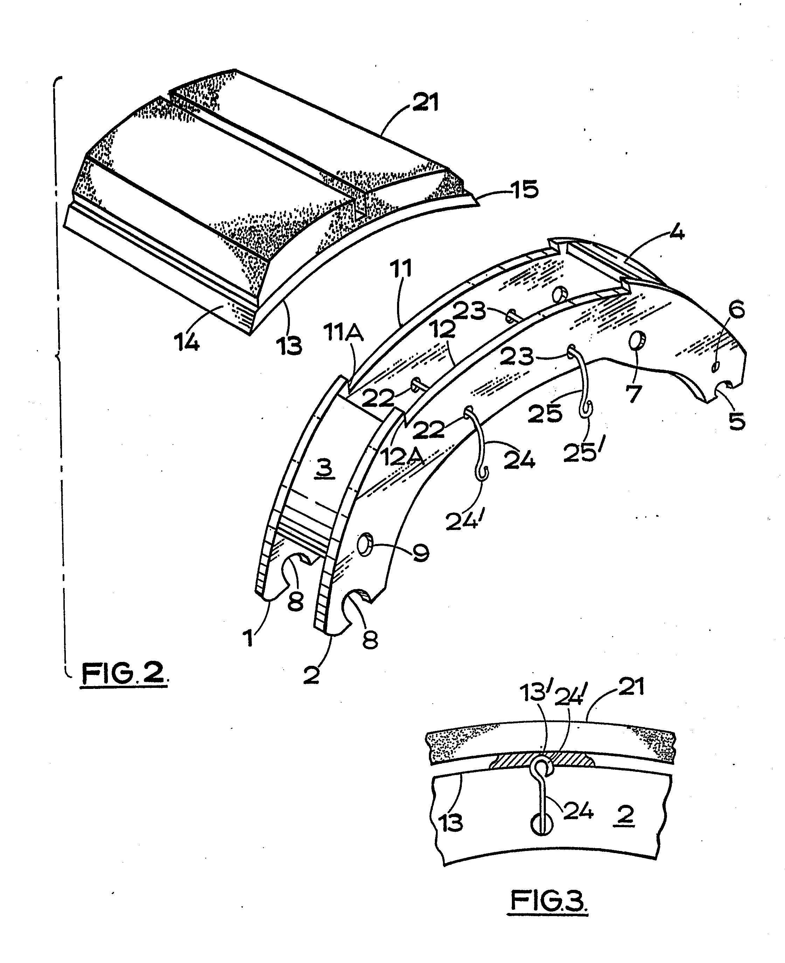

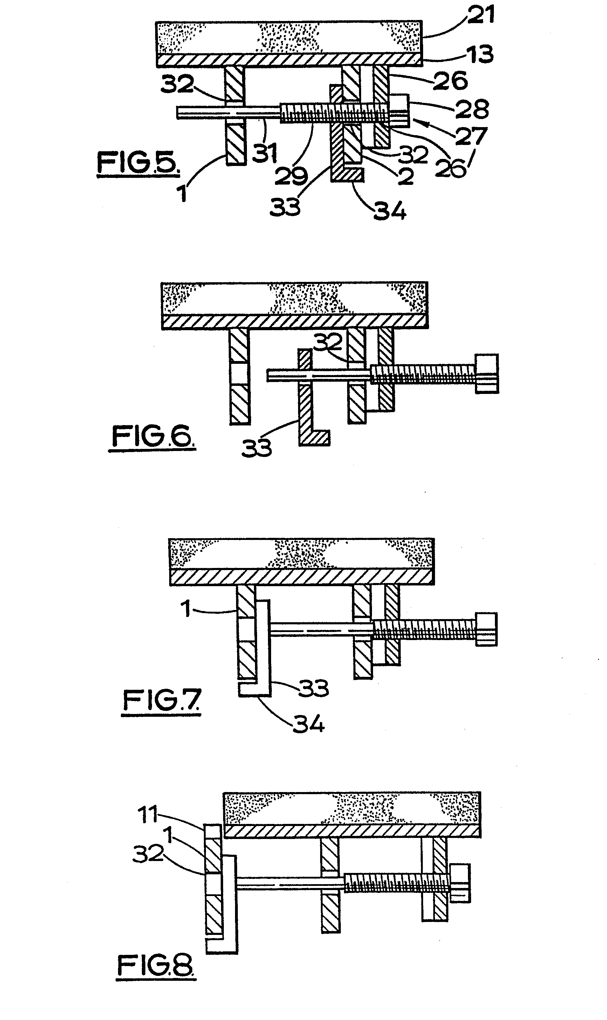

Referring now to Figures 2 and 3, the brake shoe has gussets and a platform which are similar to those described with reference to Figure 1, the same reference numerals being used to identify corresponding parts of the brake shoe. The platform 13 does not have a lug 16. Aligned holes 22, 23 in the gussets 1, 2 accommodate spring clips 24, 25. The concave face of the platform 13 is provided with locating slots 13' which, when the platform is correctly assembled to the gussets, are aligned with the similar, cranked ends 24', 25' of the spring clips 24, 25. The assembly is secured by rotating the clips so that their ends 24' 25' engage in the slots 13' in the platform 13, as seen in Figure 3.

The brake shoe assembly of Figure 1 can be dis-assembled from one side by removal of the wing screw 19 and withdrawal of the platform 13 when the lining 21 is worn. A replacement lined platform 13 can then be fitted in the manner described. There is thus no need to remove the gusset assembly, as has to be done with conventional brake shoes. If desired, the lug 16 may be extended (as shown in broken lines) and provided with a screw-threaded hole 16' at each side of the hole 17. In the event that the platform 13 is fast in its mounting, screws can be inserted in these additional holes 16' and can be used to react against the adjacent gusset 2 to release the platform 13 and assist in its removal from the recesses 11, 12.

With the brake shoe of Figures 2 and 3 the spring clips 24, 25 can be rotated from either side of the gusset assembly, thereby enabling the platform 13 to be inserted and withdrawn from either side. The additional advantage of this feature will be realised when considering a trailer axle. It presents the possibility of replacement of the platform after removal of the brake dust cover, if fitted. This avoids the necessity of jacking the axle and removing the wheel or wheels and brake drum to gain access to the brake shoes. Similarly, the Figure 1 construction can be assembled to be accessed and serviced after removal of the dust cover, rather than after removal of the brake drum.

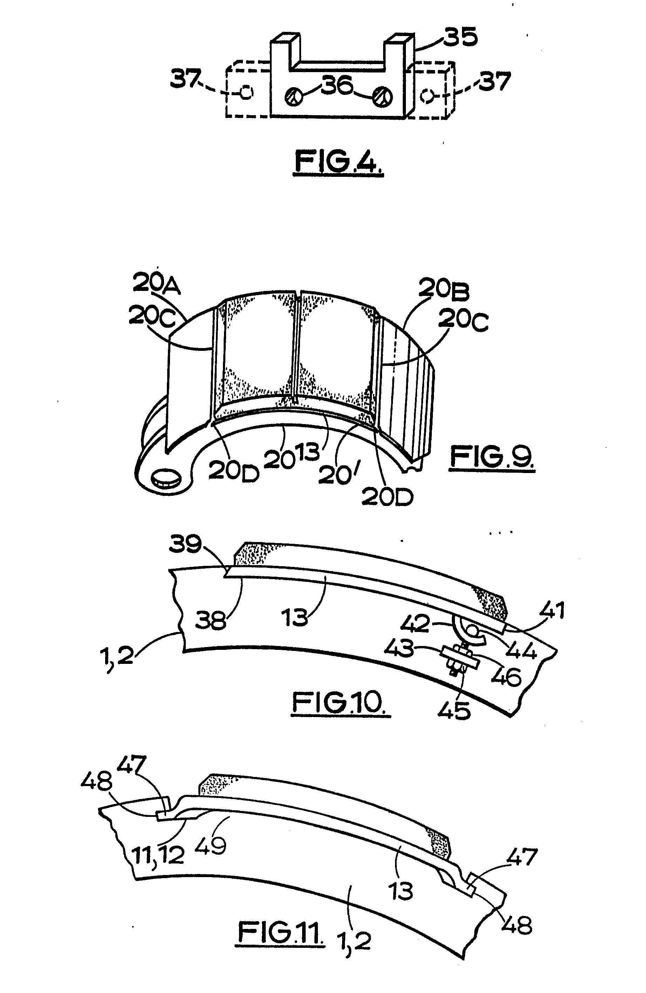

Provision may be made to release and assist withdrawal of the platform 13 from the gusset assembly of Figure 2 by provision of holes in the concave face of the platform, aligned with, or outboard of, the slots 13' in which pegs on a withdrawal tool can be inserted. Such a tool, as 35, illustrated in Figure 4, might have two screw-threaded holes 36, into which screws are inserted to engage and react against the adjacent gusset 1 or 2 and so cause withdrawal, or partial withdrawal, of the platform from the recesses 11, 12.

If desired, provision may be made to facilitate insertion of the platform 13, and its replacements, into the recesses 11, 12. For example, screw-threaded holes 18 in the gussets, or in one of them, may be used in conjunction with correspondingly screw-threaded members and the lug 16 to cause the platform 13 to be drawn into the recesses. The withdrawal tool 35 which has been described may also have plain holes, as 37, whereby, in conjunction with screw-threaded holes in the adjacent gusset 1, 2, it can serve as both an insertion tool and a withdrawal tool.

Referring now to Figures 5 to 8, the modified platform 13 shown has a lug 26 of generally U-section or L-section, for stiffness, with a screw-threaded hole 26' in which a screw 27 is received. The screw 27 has a head 28 of a conventional shape to be engaged by a spanner or drive socket, a threaded shank 29 and a plain extension 31 of reduced diameter. The gussets 1, 2 have holes 32 which are in alignment with the screw-threaded hole in the lug 26 and are of a size to allow the extension 31 and shank 29 respectively to pass through with clearance. A locking member comprising a lock plate 33 has a screw-threaded hole to receive the shank 29 and a lip 34 to locate under the adjacent gusset 2 so as to prevent rotation of the lock plate.

As seen in Figure 5, the platform 13 is mounted on the gussets 1, 2, is located laterally by abutment of the lug 26 against the adjacent gusset 2, and is retained by the screw 27 the lock plate 33. A spring washer, not shown, may be located between the head 28 and the lug 26 if desired so as to ensure location of the sides of the lug 26 against the adjacent gusset 2.

Figure 6 shows the screw 27 released from the lock plate 33, allowing the platform 13 to be withdrawn from its mounting on the gussets 1, 2. If the platform 13 is fast in the mounting and needs to be released therefrom the lock plate 33 may be taken off the extension 31, reversed so that the lip 34 engages below the other gusset 1 and a plain portion of the lock plate blanks off the hole 32 in that gusset 1. The lock plate is held in this position (either manually or it can be provided with a spring clip to hold it in position on the gusset 1) and the screw 27 is advanced until the extension 31 engages the lock plate 33, as seen in Figure 7. Further rotation of the screw 27 now draws the platform 13 to the right (as drawn) out of its mounting. When the platform is free of the recess 11 in the gusset 1 remote from the lug 26 it can be withdrawn manually from the recess 12 in the rear gusset 2 without difficulty.

When re-fitting the platform, or a replacement platform, the screw 27 is unscrewed to the position shown in Figure 6. The platform is entered into the recess 11, 12 and the lock plate 33 is returned to its original position and held abutting the inside of the near gusset 2 so as to receive the shank 29 when the screw 27 is rotated to advance it through the hole 32 in that gusset 2. On tightening of the screw 27 the platform is secured in position, as shown in Figure 5.

It will be appreciated that the platform 13 requires to be firmly fixed in its mounting so that, on braking, no instability is induced due to relative movement between the platform and the gussets. This may be achieved by making the platform 13 a good fit in the recesses 11, 12 and relying on the screw 19 or 27, or clips 24, 25, for lateral location and retention of the platform.

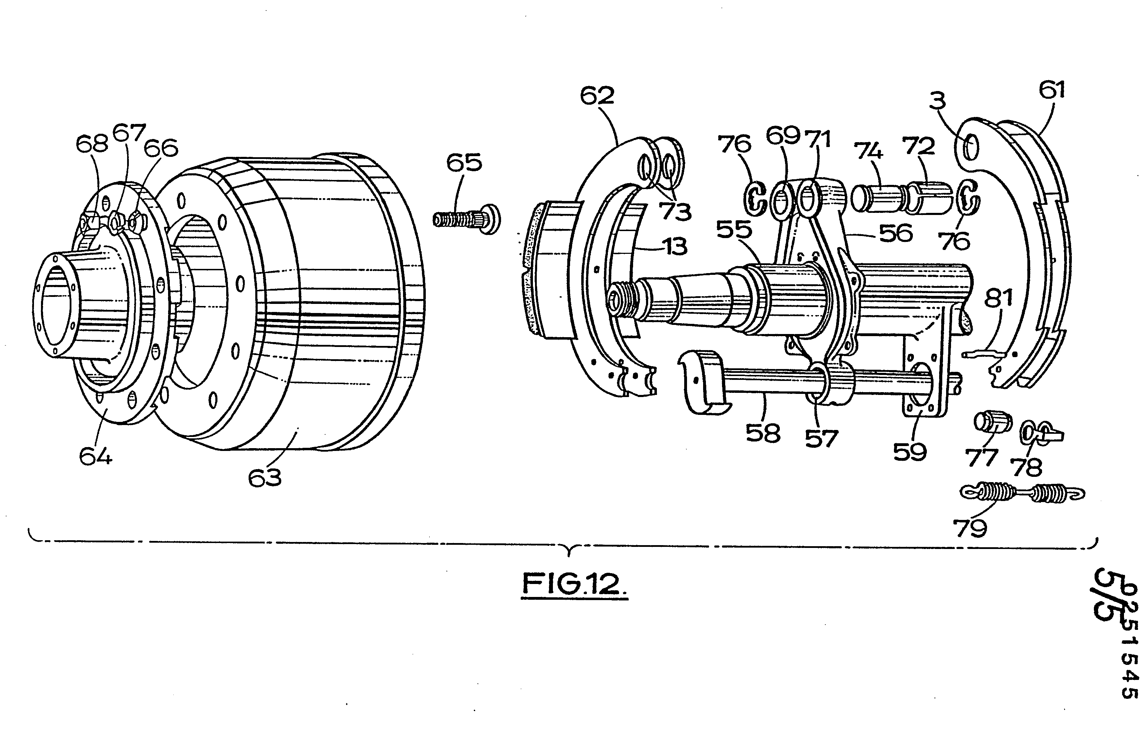

In an alternative construction, Figure 10, the gussets 1, 2 have recesses 38 with one inwardly inclined side 39 which provides a longitudinal location for a complementally inclined edge of the platform 13. The other side 41 of each of the recesses 38 is generally normal to the outer edge of the gusset and the opposite edge of the platform is similarly orientated whereby that end of the platform can be moved radially out of the recesses. This construction makes it easier to release and withdraw the platform. Lateral locating of the platform may be provided by a slotted hook 42 secured, as by welding, to the underside of the platform 13 and which engages the adjacent gusset 2 when the platform is correctly positioned laterally. The gusset 2 may have a slotted lug 43 extending laterally from it, and a T-head bolt 44 suspended from the slot in the hook 42 may be inserted into the lug 43, and a nut 45 tightened on it to secure the platform 13 in the mounting. A locknut 46 can be provided on the bolt 44 and tightened to the outer surface of the lug 46 when securing the platform, as an additional security. On release of the nut 45 the locknut 46 may be screwed down against the lug 43, so forcing the bolt 44 outwards to engage the platform 13 and break any adhesion between the platform and the recesses, thereby releasing the platform to allow its withdrawal.

Alternatively adhesion may be broken by use of a lever between the lug 43 and hook 42 after release of the bolt 44. The lug 43 is shown positioned radially inwardly of the hook 42. However, the lug 43 may be offset from that position (conveniently a little to the left of the position as drawn) so that on tightening of the nut 45 a component of force longitudinally of the gussets is imparted to the platform to ensure that its inclined edge is fully engaged in the V-shaped end of the recess.

In the event that the brake shoe has a single gusset it may be provided with laterally extending means, for example outrigger supports or guides, as part of the mounting for the platform whereby the platform is correctly located and supported on the gusset. The platform may be removably secured to the gusset, for example in a manner similar to what has been illustrated and described with reference to the accompanying drawings.

Whilst the embodiments which have been illustrated and described with reference to Figures 1 to 8 and 10 have bridges 3, 4 between and connecting the gussets, the brake shoe may be of more conventional construction

and utilise bridges which overlie the gussets and extend laterally beyond them in the manner of the platform of a conventional brake shoe, as 20A and 20B on the brake shoe 20 of Figure 9. The brake shoe 20 has a mounting for the platform 13 provided by a recess 20' between the bridges 20A, 20B. The recess, as shown, has inclined sides 20C with which inclined edges 20D of the platform engage. Such bridges as 20A, 20B may provide guidance, location and retention for the platform, and indeed support for it. Such a construction is also applicable to a brake shoe in accordance with this invention having a single gusset.

Referring now to Figure 11, the platform 13 has joggled edges 47 and the recesses in gussets, 1, 2 have their opposite sides 48 shaped as slots to receive the edges 47. The recesses preferably have a raised portion 49 to provide support for the platform 13. The constructions of Figures 9 and 11 may be modified as illustrated and described with reference to Figure 10. Any of the various methods of lateral location, securing of the platform to the gusset or gussets and provision for release of the platform from its mounting which have already been described may be used with the brake shoes of Figures 9 and 11. The construction of Figure 9 may be modified by adapting the joggled construction of Figure 11.

It will be appreciated that suitable anti-corrosive protection may be applied to the edges of the platform. If desired, the edges of the platform may be relieved where they are not engaged in the mounting so that if any corrosion product build-up should occur this will not inhibit withdrawal of the platform from the mounting.

Reference will now be made to the brake assembly shown in Figure 12. One end of a conventional trailer axle beam 55 has a brake anchor bracket 56 secured to it, as by welding. The anchor bracket 56 has a bore 57 to receive a bearing (not shown) for an S cam shaft 58. A bracket 59 provides a support for a further bearing (not shown) for the cam shaft 58. The cam shaft is rotated by an actuator (not shown) to expand the brake shoes 61, 62 against the inside wall of a brake drum 63 to brake a road wheel (not shown) fitted to a hub 64. The hub 64, the road wheel and brake drum 63 are secured together by wheel bolts 65, collars 66, 67 and nuts 68. The hub 64 is rotatably mounted on bearings (not shown) on the end of the axle beam 55.

The anchor bracket 56 has two adjacent bores 69, 71 each of which receives a bush 72.

The brake shoes 61, 62 have parallel spaced gussets with recesses for platforms generally as has been described. A platform 13 is shown on the one brake shoe 62 but has been omitted from the other brake shoe 61 for clarity. Instead of the slots 8 the gussets are shown with aligned holes 73, as in the brake shoe 20 of Figure 9. The gussets of the said one brake shoe 62 straddle the bore 69 so that the holes 73 are aligned with the bush 72 in the bore 69, and an anchor pin 74 is inserted in the bush and is retained therein by spring clips 75, 76 engaged in annular grooves at the end of the anchor pin, outboard of the gussets. The other brake shoe 61 is similarly pivotally anchored. A cam roller 77 and retainer 78 for the other end of each brake shoe are shown. The cam rollers are engaged by the cam on the end of the cam shaft 58. A brake release spring 79 is secured

12

between the brake shoes by pins 81 which are located in aligned holes (as 7, Figures 1, 2) between the gussets of the respective brake shoes.

## CLAIMS

1. A brake shoe comprising at least one generally arc-shaped gusset and a platform thereon having an outer face adapted to carry a friction lining, characterised in that the gusset (1, 2) and platform (13) are separable components, a mounting (11, 12, 20', 38) is fast with the gusset (1, 2), the platform (13) has at least one surface (14, 15, 20D, 48) which co-operates with the mounting (11, 12, 20', 38) to locate the platform (13) relative to the gusset, and releasable means (16, 19, 24, 25, 27, 33, 35, 44, 45, 46) secure the platform and gusset together in assembled relationship.

2. A brake shoe according to Claim 1 characterised in that means (16, 19, 27, 33, 35, 44, 46) are provided to act between the platform (13) and the gusset (1, 2) to cause release, or release and at least partial withdrawal, of the platform (13) from the mounting (11, 12, 20', 38).

3. A brake shoe according to Claim 1 or Claim 2 characterised in that there are two gussets (1, 2) secured in spaced relationship by bridges (3, 4), and the mounting comprises a recess (11,12,38) defined by aligned relieved portions of the gussets (1, 2), a side (11A, 12A, 39, 48) of the recess (11, 12, 38) and an edge (14, 47) of the platform (13) having inter-engaging surfaces whereby the edge of the platform (14,47) is received and located by the sides (11A, 12A, 39, 48) of the recess (11, 12, 38).

4. A brake shoe according to Claim 1 or Claim 2 characterised in that there are two gussets (1, 2) secured in spaced relationship by transversely extending bridges (20A, 20B), and the mounting comprises a recess (20') between the bridges (20A, 20B), one side (20C) of the recess (20') and an edge (20D) of the platform (13) having interengaging surfaces whereby the edge (20D) of the platform (13) is received and located by the side (20C) of the recess (20').

5. A brake shoe as claimed in Claim 3 or Claim 4 characterised in that the engaging surfaces at the side (11A, 12A, 20C, 39) of the recess (11, 12, 20', 38) and the edge (14, 20D) of the platform are complementally inclined, the inclined edge (14, 20D) being engaged by the inclined side (11A, 12A, 20C, 39) and retained thereby.

6. A brake shoe as claimed in Claim 5 characterised in that two opposite sides (11A, 12A, 20C) of the recess (11, 12, 20') and two opposite edges (14, 15, 20D) of the platform (13) are complementally inclined whereby both of said edges of the platform are located and retained by both of said sides of the recess.

7. A brake shoe as claimed in Claim 3 or Claim 4 characterised in that the platform (13) has at least one joggled edge (47) and the recess (11, 12) has a side (48) shaped to receive and retain the joggled edge (47).

8. A brake shoe as claimed in any preceding claim characterised in that the platform (13) has a lug (16) extending generally parallel to the, or one, gusset (2), at an outer side of the gusset, there being a hole (17) through the lug (16), a registering screw-threaded hole (18) in the gusset (2) and a screw-threaded member (19) received in the registering holes (17, 18) securing the platform (13) and gusset (2) in assembled relationship.

9. A brake shoe as claimed in any one of the Claims 1 to 7 characterised in that the platform (13) has a lug (26) extending generally parallel to the, or one, gusset (2), at an outer side of the gusset, a screw-threaded hole (26') in the lug (26) in register with a hole (32) in the gusset (2), a screw-threaded member (27) received in the registering holes (26', 32) and secured by a complementally screw-threaded locking member (33) at an inner side of the gusset (2).

10. A brake shoe as claimed in Claim 9 characterised in that the locking member (33) is adapted to be used in conjunction with the screw-threaded member (27) so as at least partially to withdraw the platform (13) from the mounting (11, 12, 20A, 20B).

11. A brake shoe as claimed in any one of Claims 1 to 7 characterised in that the releasable means comprises spring or like clip members (24, 25) acting between the or each gusset (1, 2) and locations (13') provided on the platform (13).

12. A brake shoe as claimed in any one of Claims 1 to 4, Claim 5 or Claim 7 characterised in that the releasable means comprises co-operating screw-threaded members (44, 45) acting between abutments (42, 43) provided on the platform (13) and the, or one, gusset (2) respectively to secure the platform (13) and gusset in assembled relationship.

13. A brake shoe as claimed in Claim 8 characterised in that release means is provided operative tô free the platform (13) for withdrawal from the mounting (11, 12) if it should become fast with the mounting, the release means comprising the lug (16), at least one screw-threaded hole (16') in the lug and engaged in the or each screw-threaded hole (16') a screw-threaded member which is able upon rotation to bear on the, or one, gusset (2) and urge the platform (13) to be moved relative to the mounting (11, 12).

14. A brake shoe as claimed in Claim 9 as dependent from Claim 3 or Claim 4 characterised in that release means is provided operative to free the platform (13) for withdrawal from the mounting (11, 12, 20', 38) if it should become fast with the mounting, the release means comprising the lug (26) extending generally parallel to the one gusset (2), the screw-threaded member (27) and the locking member (33), the screw-threaded member (27) and locking member (33) being adapted to be able to co-operate such that upon rotation of the screw-threaded member it reacts on the other gusset (1) through the locking member (33) and causes the platform (13) to be moved relative to the mounting (11, 12, 20', 38).

0251545

FIG1.

FIG.2.

FIG.3.

FIG.5.

FIG.6.

FIG.7.

FIG.8.

0251545

FIG.4.

FIG.9.

FIG.10.

FIG.11.

FIG.12.

0251545

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A-1 345 705 (GIRLING LTD)<br>* Whole document; figures 1-8 * | 1,2 | F 16 D 65/08 |
| Y | * Page 2, lines 17-32; figures 1,2 * | 3-6 | |
| X | US-A-3 398 814 (W.T. DEIBEL)<br>* Column 4, line 45 - column 5, line 54; figures 1-9 * | 1,2,8 | |
| X | GB-A-1 264 116 (GIRLING LTD)<br>* Whole document; figures 1-11 * | 1,2,8 | |
| A | * Page 2, lines 49-66; figures 2,4,7 * | 7 | |
| X | GB-A-1 337 257 (GIRLING LTD)<br>* Page 2, lines 56-60; lines 109-113; figures 1-4 * | 1,2,11 | |
| X | US-A-3 650 360 (R.L. KING)<br>* Column 2, lines 51-75; figures 2,3,6,7 * | 1,2 | |
| Y | * Column 3, lines 28-31; figures 2,3,6,7 * | 3-6 | |

--- -/-

TECHNICAL FIELDS SEARCHED (Int Cl 4)

F 16 D 65/00
F 16 D 69/00
F 16 D 51/00
B 61 H 3/00
B 61 H 1/00
B 61 H 5/00

The present search report has been drawn up for all claims

| Place of search | Date of completion of the search | Examiner |
|---|---|---|
| THE HAGUE | 26-08-1987 | BRAEMS C.G.I. |

**EUROPEAN SEARCH REPORT**

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 436 897 (CLAUDE ALEXANDER PANTON) * Page 2, lines 103-112; page 3, lines 8-18; figures 1,3,4 * | 3-6 | |
| A | US-A-1 716 393 (J.S. THOMPSON) * Figure 1 * | 1,2,7 | |
| A | US-A-1 724 053 (J.S. THOMPSON) * Figures 1-3 * | 1,2,7 | |
| A | FR-A- 757 380 (BORDONI) * Page 2, lines 66-70; figures 1-9 * | 1-6 | |
| A,D | GB-A-1 580 963 (ROCKWELL INTERNATIONAL CORP.) | 1-6 | TECHNICAL FIELDS SEARCHED (Int. Cl.4) |

The present search report has been drawn up for all claims

| Place of search | Date of completion of the search | Examiner |
|---|---|---|
| THE HAGUE | 26-08-1987 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82